# EUROPÄISCHE PATENTANMELDUNG

(11) **EP 1 398 701 A1**
(43) Veröffentlichungstag der Anmeldung: **17.03.2004**
(21) Anmeldenummer: 02027848.7
(22) Anmeldetag: 12.12.2002
(51) Int. Cl.: G06F 11/16

(54) **Verfahren zur Ereignissynchronisation, insbesondere für Prozessoren fehlertoleranter Systeme**

(30) Priorität: 12.09.2002 EP 02020602
(71) Anmelder: SIEMENS AKTIENGESELLSCHAFT, 80333 München (DE)
(72) Erfinder: Peleska, Pavel, 82166 Gräfelfing (DE); Schnabel, Dirk, 81369 München (DE); Weber, Anton, 81825 München (DE)

(57) **Zusammenfassung**

Für redundante Systeme werden vielfach identisch aufgebaute Prozessorboards vorgesehen, die im Lockstep-Betrieb arbeiten. Die grundlegende Voraussetzung für die Implementierung eines Lockstep Systems ist das deterministische Verhalten aller im Board enthaltenen Komponenten, also CPUs, Chip Sets, Hauptspeicher etc. Deterministisches Verhalten bedeutet dabei, daß diese Komponenten im fehlerfreien Fall identische Ergebnisse zu identischen Zeitpunkten liefern, wenn die Komponenten identische Stimuli zu identischen Zeitpunkten erhalten. Deterministisches Verhalten setzt ferner die Verwendung taktsynchroner Schnittstellen voraus. Asynchrone Schnittstellen bewirken im System in vielen Fällen eine gewisse zeitliche Unschärfe, wodurch das taktsynchrone Gesamtverhalten des Systems nicht aufrecht erhalten werden kann. Um dennoch einen Lockstep-Betrieb durchführen zu können, sieht die vorliegende Erfindung ein Verfahren zur Synchronisation externer Ereignisse, die einem Prozessor (CPU) zugeführt werden und diesen beeinflussen, vor, demgemäß die externen Ereignisse zwischengespeichert werden, und den Prozessoren an identischer Stelle in der Befehlsausführung präsentiert werden, wobei Probleme, die durch die Fähigkeit moderner Prozessoren, Befehle parallel abzuarbeiten, entstehen, vermieden werden, indem die Parallelausführung der Prozessoren vor Erreichen der gewünschten Stelle in der Befehlsabarbeitung unterbunden und anschließend im Single-Step-Modus diese Stelle exakt erreicht wird.

## Beschreibung

In Telekommunikationssystemen, in Data-Centern und anderen hochverfügbaren Systemen werden in vielen Fällen bis zu einigen Hundert sogenannter Prozessorboards eingesetzt, um die erforderliche Rechenleistung vorzusehen. Ein solches Prozessorboard besteht typischerweise aus einem Prozessor bzw. einer CPU (Central Processing Unit), einem Chip Set, Hauptspeicher und Peripheriebausteinen.

Die Wahrscheinlichkeit des Auftretens eines Hardware-Defektes eines typischen Prozessorboards pro Jahr liegt im einstelligen Prozentbereich. Aufgrund der großen Anzahl zu einem System zusammengefaßter Prozessorboards ergibt sich eine auf den Jahreszeitraum bezogene sehr hohe Wahrscheinlichkeit eines Ausfalls einer beliebigen Hardware-Komponente, wobei ein solcher Einzelausfall, falls geeignete Vorkehrungen nicht getroffen werden, den Ausfall des gesamten Systems hervorrufen kann.

Insbesondere an Telekommunikationssysteme, in zunehmendem Maße auch an Data-Center, wird die Forderung nach einer hohen Systemverfügbarkeit gestellt. Diese wird beispielsweise in Prozent ausgedrückt, oder es wird die maximal zulässige Ausfallzeit pro Jahr angegeben. Typische Anforderungen sind z.B. eine Verfügbarkeit von >99.999% bzw. eine Nichtverfügbarkeit von höchstens einigen Minuten im Jahr. Da üblicherweise der Austausch eines Prozessorboards und die Wiederherstellung des Dienstes im Falle eines Hardwaredefektes eine Zeit beansprucht, die im Bereich einige 10 Minuten bis einige Stunden liegt, müssen für den Fall eines Hardwaredefektes auf Systemebene entsprechende Vorkehrungen getroffen werden, um die Forderung nach der Systemverfügbarkeit erfüllen zu können.

Bekannte Lösungen zur Einhaltung solch hoher Anforderungen an die Systemverfügbarkeit sehen redundante Systemkomponenten vor. Die bekannten Verfahren lassen sich in zwei hauptsächliche Gruppen einteilen: softwarebasierte Verfahren und hardwarebasierte Verfahren.

Bei softwarebasierten Verfahren wird typischerweise eine Middleware eingesetzt. Die softwarebasierte Lösung erweist sich jedoch als wenig flexibel, da lediglich diejenige (Applikations-)Software in einem solchen System eingesetzt werden kann, die für dieses besondere Redundanzschema entwickelt wurde. Dies schränkt das Spektrum einsetzbarer (Applikations)Software erheblich ein. Darüber hinaus ist die Entwicklung von Applikationssoftware für Softwareredundanzprinzipien in der Praxis äußerst aufwendig, wobei die Entwicklung zusätzlich ein kompliziertes Testverfahren nach sich zieht.

Das Grundprinzip hardwarebasierter Verfahren beruht darauf, die Redundanz auf Hardwareebene zu kapseln, so daß dies für die Software transparent ist. Der wesentliche Vorteil einer von der Hardware selbst verwalteten Redundanz ist der, daß die Applikationssoftware durch das Redundanzprinzip nicht beeinträchtigt wird und somit in den meisten Fällen jede beliebige Software zum Einsatz kommen kann.

Ein in der Praxis häufig anzutreffendes Prinzip für hardwarefehlertolerante Systeme, deren Redundanz für die Software transparent ist, ist das sogenannte Lockstep-Prinzip. Lockstep bedeutet, daß identisch aufgebaute Hardware, z.B. zwei Boards, gleichartig taktsynchron betrieben werden. Durch Hardwaremechanismen wird sichergestellt, daß die redundante Hardware zu einem gegebenen Zeitpunkt identische Eingangsstimuli erfährt und dadurch zu identischen Ergebnissen kommen muß. Die Ergebnisse der redundanten Komponenten werden verglichen, im Fall einer Abweichung wird ein Fehler festgestellt und geeignete Maßnahmen werden eingeleitet (Alarmierung an das Bedienpersonal, partielle oder vollständige Sicherheitsabschaltung, Systemneustart).

Die grundlegende Voraussetzung für die Implementierung eines Lockstep-Systems ist das taktweise deterministische Verhalten aller im Board enthaltenen Komponenten, also CPUs, Chip Sets, Hauptspeicher etc. Taktweise deterministisches Verhalten bedeutet dabei, daß diese Komponenten im fehlerfreien Fall identische Ergebnisse zu identischen Takt-Zeitpunkten liefern, wenn die Komponenten identische Stimuli zu identischen Takt-Zeitpunkten erhalten. Taktweise deterministisches Verhalten setzt ferner die Verwendung taktsynchroner Schnittstellen voraus. Asynchrone Schnittstellen bewirken im System in vielen Fällen eine gewisse zeitliche Unschärfe, wodurch das taktsynchrone Gesamtverhalten des Systems nicht aufrecht erhalten werden kann.

Gerade für Chip Sets und CPUs bieten asynchrone Schnittstellen jedoch technologische Vorteile bei der Erhöhung der Leistungsfähigkeit, wodurch eine taktsynchrone Betriebsweise nach dem Lockstep-Verfahren unmöglich wird. Zudem verwenden moderne CPUs zunehmend Mechanismen, die eine taktsynchrone Betriebsweise unmöglich machen. Dies sind beispielsweise interne, nach außen nicht sichtbare Korrekturmaßnahmen, z.B. Korrektur eines internen, korrigierbaren Fehlers beim Zugriff auf den Cache-Speicher, die zu einer geringfügigen Verzögerung der Befehlsabarbeitung führen können, oder die spekulative Ausführung von Befehlen. Ein weiteres Beispiel ist die zukünftig zunehmende Implementierung von CPU-internen taktfreien Ausführungseinheiten, die erhebliche Vorteile hinsichtlich Geschwindigkeit und Verlustleistung ermöglichen, jedoch ein taktsynchrones bzw. deterministisches Arbeiten der CPU verhindern.

Die europäische Patentanmeldung 02020602 offenbart ein Verfahren zur Synchronisation externer Ereignisse, die einer CPU zugeführt werden und diese beeinflussen, demgemäß die externen Ereignisse zwischengespeichert werden, wobei die gespeicherten externen Ereignisse in einem gesonderten Betriebsmodus der CPU zur Verarbeitung durch eine Ausführungseinheit abgerufen werden und wobei die CPU in diesen Betriebsmodus ansprechend auf die Erfüllung einer durch Befehle vorgebbaren oder fest vorgegebenen Bedingung eintritt. Dieses Verfahren wird auch "emulierter Lockstep Betrieb" genannt.

Vorteilhaft sieht die EP 02020602 vor, daß der Wechsel in den gesonderten Betriebsmodus ausgeführt wird, falls durch ein Komparatorelement der CPU die Übereinstimmung eines Zählers mit einem Maximum Instruction Register (MIR) ermittelt wird, wobei der Inhalt des MIR durch Befehle vorgebbar ist und der Zähler die Anzahl der durch die Ausführungseinheit ausgeführten Instruktionen seit dem letzten Wechsel in den gesonderten Betriebsmodus enthält.

Moderne CPUs lassen sich jedoch nicht so stoppen, daß sie nach einer exakten Anzahl von Instruktionen anhalten. Dies liegt darin begründet, daß mehrere Instruktionen parallel abgearbeitet werden können, die zu einem gemeinsamen Zeitpunkt abgeschlossen werden. So können beispielsweise in einem Takt 99 Instruktionen auf allen redundanten CPUs abgearbeitet sein, im nächsten Takt sind es beispielsweise aufgrund unterschiedlicher Ausführung dann auf einer CPU 100 Instruktionen, auf einer anderen jedoch 101 Instruktionen. Ein externes Ereignis, z.B. ein Interrupt, kann so nicht an identischen Stellen in der Befehlsausführung präsentiert werden.

Es ist eine Aufgabe der vorliegenden Erfindung, ein Verfahren anzugeben, mit dem externe Ereignisse auch dann an gleichen Stellen in der Befehlsausführung redundanter CPUs präsentiert werden, wenn das Anhalten der redundanten CPUs nach Ausführung ein und derselben Instruktion nicht gesichert möglich ist.

Diese Aufgabe wird durch ein Verfahren zur Synchronisation externer Ereignisse gemäß der Merkmale des Patentanspruchs 1, durch einen Prozessor gemäß der Merkmale des Patentanspruchs 6 und durch ein System gemäß der Merkmale des Patentanspruchs 7 gelöst. Vorteilhafte Weiterbildungen sind in den abhängigen Ansprüchen angegeben.

Erfindungsgemäß wird ein Verfahren zur Synchronisation externer Ereignisse, die einem Baustein CPU zugeführt werden und diesen beeinflussen, wobei der Baustein CPU zur parallelen Abarbeitung von einer ersten Anzahl von Instruktionen vorgesehen ist, vorgesehen,
- demgemäß die externen Ereignisse zwischengespeichert werden, wobei die gespeicherten externen Ereignisse in einem gesonderten Betriebsmodus des Bausteins zur Verarbeitung durch zumindest eine Ausführungseinheit EU des Bausteins abgerufen werden und
- wobei der Baustein in diesen Betriebsmodus nach Abarbeitung einer vorgebbaren zweiten Anzahl MIC von Instruktionen eintritt, indem
- ein Zähler (IC) die Anzahl der durch die Ausführungseinheit ausgeführten Instruktionen seit dem letzten Verlassen des gesonderten Betriebsmodus ermittelt,
- der Baustein in einen Einzelbefehlsausführungsmodus versetzt wird, falls der Zähler IC größer oder gleich der Differenz aus der zweiten Anzahl von Instruktionen und einer dritten Anzahl MD von Instruktionen, die aus der ersten Anzahl von Instruktionen ermittelt wird, ist,
- der Baustein im Einzelbefehlsausführungsmodus verbleibt, bis der Zähler IC die zweite Anzahl MIC von Instruktionen erreicht, woraufhin der Baustein in den gesonderten Betriebsmodus wechselt und bei Verlassen des gesonderten Betriebsmodus der Zähler IC neu initialisiert wird.

Die genannte dritte Anzahl von Instruktionen ist dabei an der maximalen Anzahl der parallel ausgeführten Instruktionen orientiert und dient dem Ausgleich der erläuterten Unschärfe beim Anhalten von CPUs mit der Fähigkeit zur parallelen Abarbeitung von Instruktionen. Die dritte Anzahl wird vorzugsweise als gleich oder größer der ersten Anzahl maximal parallel ausgeführter Instruktionen gewählt.

In redundanten Systemen, die zumindest zwei Bausteine CPU aufweisen, wird eine identische Folge von Instruktionen für die Bausteine CPU vorgesehen, und durch die Bausteine werden im gesonderten Betriebsmodus identische externe Ereignisse abgerufen. Ein schnellerer Baustein CPU wird durch eine Steuerung im gesonderten Betriebsmodus belassen, bis ein langsamerer Baustein das Ende des gesonderten Betriebsmodus erreicht hat.

Das erfindungsgemäße Verfahren kann durch eine Software, durch Microcode oder durch spezialisierte Hardware realisiert werden. Bei einer Überwachung des Zählers IC durch ein Überwachungssoftwaremodul wird die Anzahl der durch das Überwachungssoftwaremodul verursachten ausgeführten Instruktionen gesondert erfaßt und vom Zähler IC subtrahiert.

Die Erfindung sieht ferner einen Prozessorbaustein CPU vor, der zumindest folgendes aufweist:
- mindestens eine Ausführungseinheit EU,
- mindestens ein Zählerelement IC zum Zählen der durch die Ausführungseinheit ausgeführten Instruktionen seit dem letzten Wechsel in einen gesonderten Betriebsmodus,
- mindestens ein Registerelement MIR, dessen Inhalt MIC durch Befehle vorgebbar oder fest vorgegeben ist,
- mindestens ein Komparatorelement K und mindestens ein Steuerelement S zum Umschalten der Ausführungseinheit EU in einen Einzelbefehlsausführungsmodus ansprechend auf das Erreichen eines vorgebbaren Wertes, der kleiner als der Wert des Registerelementes MIR ist, durch das Zählelement IC, und zum Umschalten der Ausführungseinheit in den gesonderten Betriebsmodus ansprechend auf die Übereinstimmung des Zählelementes IC mit dem Registerelement MIR, wobei in dem gesonderten Betriebsmodus zwischengespeicherte, dem Prozessorbaustein CPU zuzuführende externe Ereignisse, die den Prozessorbaustein CPU beeinflussen, durch den Prozessorbaustein CPU abgerufen werden.

Mehrere dieser Prozessoren können vorteilhaft zu einem System zusammengefaßt werden, wobei das System zusätzlich eine Verbindung L0, L1 zwischen zumindest zwei der Prozessorbausteine CPU, die eine identische Instruktionsfolge ausführen, aufweist, wobei die Verbindung zum Übertragen von Synchronisationsinformationen der gesonderten Betriebsmodi vorgesehen ist.

Ein wesentlicher Vorteil der Erfindung ist darin zu sehen, daß die Verwendung beliebiger neuer oder bestehender Software auf einer hardwarefehlertoleranten Plattform ermöglicht wird, wobei in dieser Plattform eine die Erfindung unterstützende CPU zum Einsatz kommen kann, ohne daß die Forderung nach taktsynchroner, deterministischer Arbeitsweise der CPU besteht und wobei die Verwendung asynchroner Hochgeschwindigkeitsschnittstellen bzw. Links möglich ist. Dabei trägt die Erfindung dem Umstand Rechnung, daß sich moderne CPUs mit Fähigkeiten zur parallelen Abarbeitung von Instruktionen nicht in jedem Fall nach einer exakten Anzahl von Instruktionen anhalten lassen.

Weitere Vorteile sind:
- Die zueinander redundanten Boards und CPUs müssen nicht phasenstarr gekoppelt betrieben werden.
- Die CPUs müssen nicht identisch sein, sie müssen lediglich nach der gleichen Anzahl abgearbeiteter Maschineninstruktionen anhalten und den Betriebsmodus wechseln.
- Die CPUs können mit unterschiedlichen Taktfrequenzen betrieben werden.
- Die CPUs können sich unterschiedlich in Bezug auf die spekulative Ausführung von Instruktionen verhalten, da nur die komplettierten Instruktionen bewertet werden.
- Unterschiedliche CPU-interne Ausführungszeiten identischer CPUs, z.B. aufgrund von Korrekturen nach dem datenverfälschendem Auftreten von Alpha-Teilchen, führen lediglich dazu, daß der Synchronisationsmodus zu geringfügig unterschiedlichen Zeitpunkten erreicht wird.

Im folgenden wird ein Ausführungsbeispiel der Erfindung im Zusammenhang mit drei Figuren näher erläutert.
- Figur 1: zeigt ein Ablaufschema des erfindungsgemäßen Verfahrens.
- Figur 2: zeigt schematisch einen erfindungsgemäßen Prozessorbaustein.
- Figur 3: zeigt schematisch ein erfindungsgemäßes System bestehend aus zwei Prozessorbausteinen gemäß Figur 2.

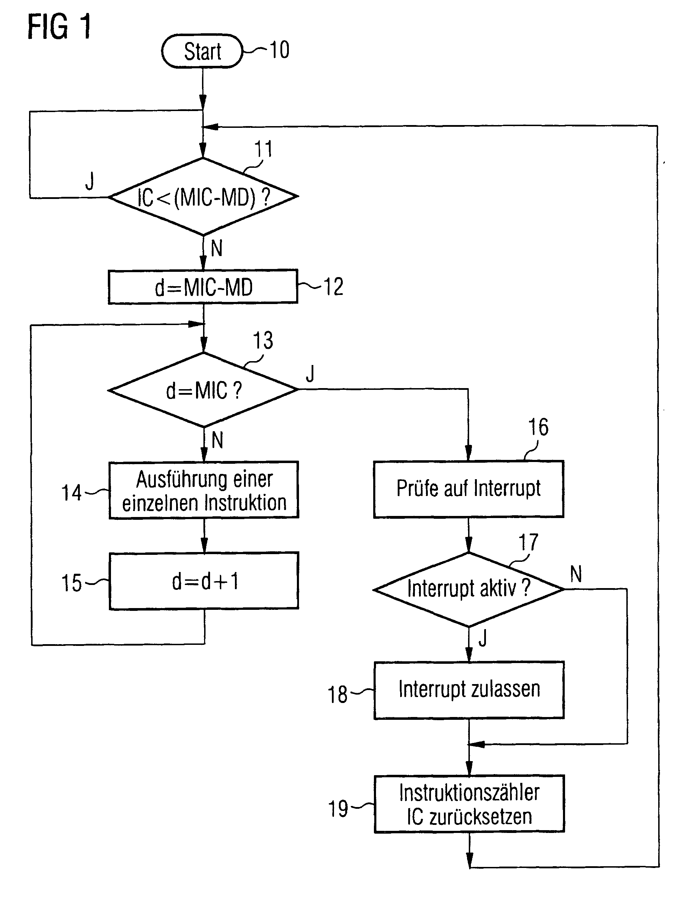

In Figur 1 ist das erfindungsgemäße Verfahren als Ablaufschema graphisch dargestellt. Vor Beginn des Ablaufs müssen folgende Werte festgelegt bzw. initialisiert sein:
- Ein Zähler IC (Instruction Counter), der die Anzahl der durch die CPU abgearbeiteten Instruktionen bzw. Maschinenbefehle enthält.
- Eine Anzahl MIC (Maximum Instruction Counter) von Instruktionen, nach welcher die CPU in den besonderen Betriebsmodus zur Abarbeitung von externen Ereignissen wechseln soll.
- Eine Anzahl MD (Maximum Deviation) von Instruktionen, die die maximal aufgrund von Parallelität der Befehlsausführung auftretende Unschärfe des Anhaltens der CPU berücksichtigt.

Der Ablauf beginnt damit, daß der aktuelle Wert des Befehlszählers IC mit der Differenz aus den Werten MIC und MD verglichen wird (Block 11). Ist der Wert des Befehlszählers geringer als diese Differenz, wird die Befehlsabarbeitung im normalen Betriebsmodus fortgesetzt; die parallele Ausführung von Instruktionen ist möglich.

Erreicht oder überschreitet der wert des Befehlszählers die Differenz aus MIC und MD, wird ein Register d mit der Differenz aus MIC und MD geladen (Block 12), und der Ablauf tritt in eine Schleife ein, an deren Beginn eine Abfrage steht, ob das Register d den Wert MIC erreicht hat (Block 13). In dieser Schleife erfolgt die Befehlsabarbeitung im Einzelschrittmodus bzw. Single Step Mode.

Solange der Wert d den Wert MIC nicht erreicht, wird in jedem Schleifendurchlauf eine einzelne Instruktion ausgeführt (Block 14) und der Wert d inkrementiert (Block 15), bevor die Schleifenbedingung (Block 13) erneut geprüft wird. Durch dieses Vorgehen wird sichergestellt, daß trotz im Normalbetrieb paralleler Befehlsabarbeitung das Eintreten in den gesonderten Betriebszustand exakt nach MIC Instruktionen erfolgt.

Falls der Wert d den Wert MIC erreicht (Block 13), tritt der Ablauf in den gesonderten Betriebsmodus ein. Der gesonderte Betriebsmodus überprüft zunächst, ob während der Abarbeitung der MIC Befehle eine Interruptanforderung eingetroffen ist und zur gleichzeitigen Abarbeitung durch alle redundanten CPUs zwischengespeichert wurde (Blöcke 16/17). Sind Interruptanforderungen eingetroffen, werden diese abgearbeitet (Block 18), wobei diese Abarbeitung durch.alle redundanten CPUs an identischer Stelle in der Programmabarbeitung erfolgt und alle Register, Speicherinhalte, .. identisch sind. Dieser Schritt wird übersprungen, falls keine Interruptanforderungen vorliegen.

Der gesonderte Betriebsmodus wird beendet, und der normale Betriebsmodus mit paralleler Verarbeitung von Instruktionen wird nach dem Rücksetzen des Befehlszählers IC (Block 19) wieder aufgenommen. Eine Interruptanforderung kann dann bearbeitet werden. Der Abarbeitung der Interruptroutine erfolgt nicht im gesonderten Betriebsmodus, sondern im normalen Modus. Lediglich das Einlesen des Interruptvektors erfolgt im besonderen Betriebsmodus, danach wird der besondere Mode wieder verlassen. Ob der Interrupt dann bearbeitet wird, hängt z.B. davon ab, ob zu diesem Zeitpunkt gerade Interrupts erlaubt sind. Interrupts sind nicht erlaubt, wenn gerade ein Interrupt bearbeitet wird und/oder ein "Interrupt Flag" gelöscht ist.

Anhand des dargestellten Ablaufs kann das erfindungsgemäße Verfahren direkt als Instruktionsfolge, d.h. als Software, implementiert werden. Dabei sorgt die Software dafür, daß ein Interrupt an identischen Stellen der Befehlsausführung mehrerer Prozessoren präsentiert wird, indem ein Instruktionszähler in der CPU so programmiert wird, daß er eine Exception, z.B. Debug-Exception, oder einen hochprioren, nicht sperrbaren Interrupt, z.B. den nichtmaskierbaren Interrupt NMI, nach der gewünschten Zahl MIC von abzuarbeitenden Instruktionen abzüglich der "Anhalteunschärfe" MD verursacht. Beispielsweise wird der Zähler IC bei einer Unschärfe von MD=3 Instruktionen und einer gewünschten Zahl von MIC=1000 Instruktionen mit 1000-3+1=998 programmiert. Die CPU wird, in Abhängigkeit der internen Bündelung von Instruktionen, also nach IC=998 oder IC=999 oder IC=1000 Instruktionen anhalten. Die daraufhin ausgeführte Software liest den Instruktionszähler aus, um festzustellen, an welcher Stelle der Prozessor tatsächlich angehalten hat. Dabei ist diese Software so beschaffen, daß die Ausführung der eigenen Instruktionen entsprechend korrigiert wird. Falls die Software feststellt, daß die CPU nach beispielsweise 999 Instruktionen angehalten hat, wird die gewünschte 1000ste Instruktion per Single-Step Betrieb, gesteuert durch die Exception-Software, nachträglich ausgeführt. Dies geschieht bei allen redundanten CPUs, so daß alle CPUs anschließend an der identischen Stelle im Code angehalten wurden.

An dieser Stelle muß der/den CPU/CPUs eine eventuell vorhandene Interruptanforderung präsentiert werden. Hierzu gibt es beispielsweise folgende Möglichkeiten:
- Die CPU kann ein Register des Interrupt-Controllers auslesen, woraufhin dieser ein maskiertes Interruptsignal freigibt. Die CPU erkennt anhand dieses Interruptsignals eine Interruptanforderung und sendet einen Interrupt Acknowledge Zyklus zum Interrupt-Controller. Der Interrupt-Controller liefert daraufhin den Interruptvektor und maskiert das Interruptsignal wieder.
- Alternativ kann die Software ein Register lesen, dessen Wert bereits die Information über die Art des Interrupts liefert, d.h. den Interruptvektor. Anschließend löst die Software selbst den entsprechenden Interrupt (per Software) aus, falls Interrupts zu diesem Zeitpunkt in der Befehlsabarbeitung erlaubt sind.

Ferner kann der Ablauf auch in Form von Microcode-Anweisungen realisiert werden. Moderne CPUs weisen in vielen Fällen weitgehende Möglichkeiten auf, mittels Microcode die Befehlsausführung zu steuern. Diese Möglichkeiten werden häufig beispielsweise dazu verwendet, Design-Fehler zu beheben bzw. zu umgehen.

Für den Zweck des erfindungsgemäßen Verfahrens wird der Microcode so geändert, daß die CPU nach der gewünschten Zahl von abzuarbeitenden Instruktionen MIC abzüglich der "Anhalteunschärfe" MD die normale Befehlsausführung unterbricht und in den Microcode verzweigt. Der Microcode liest die Anzahl ausgeführter Instruktionen IC aus und steuert die Ausführung per Single-Step so an, daß die Befehlsausführung an der gewünschten Stelle MIC angehalten wird.

An dieser Stelle muß der/den CPU/CPUs wiederum eine eventuell vorhandene Interruptanforderung präsentiert werden. Hierzu gibt es ebenfalls mehrere Möglichkeiten:
- Ein per Microcode maskiertes Interruptsignal wird per Microcode freigegeben, und falls ein Interrupt anliegt, wird die CPU in die entsprechende Interruptroutine verzweigen. Anschließend wird der Interrupt wieder per Microcode maskiert.
- Alternativ kann die CPU veranlaßt werden, einen Interrupt Acknowledge Zyklus zu generieren und einen Interruptvektor zu lesen. Dieser wird dann per Microcode der CPU so präsentiert, daß diese nach dem Verlassen des gesonderten Modus in die entsprechende Interruptroutine verzweigt.

Ferner kann eine Implementierung in der Codeübersetzungssoftware erfolgen. Einige CPUs verfügen über einen einfachen, aber sehr schnellen, meist superskalaren RISC- oder VLIW-Prozessor Kern. Der eigentliche Befehlsatz, z.B. IA-32, wird durch eine Codeübersetzungssoftware in einen einfachen Code transformiert und vom RISC-/VLIW-Prozessor ausgeführt. In diesem Falle führt die Code Übersetzungssoftware die Aufgabe des Verfahrens aus, analog der Implementierung in Microcode. Die Präsentation der Interruptanforderungen erfolgt wie bei der Microcode-Implementierung.

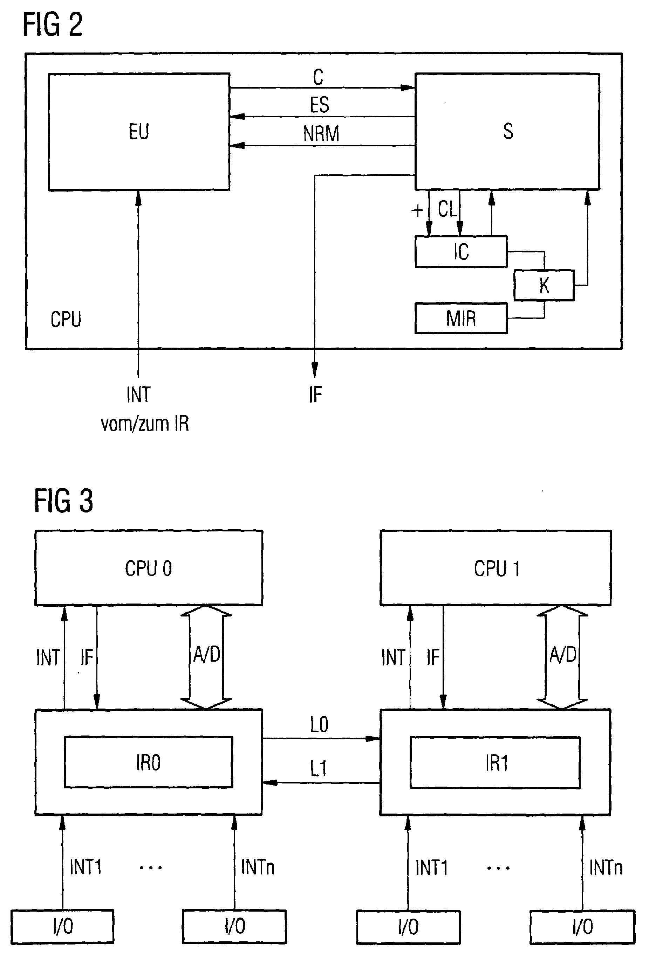

Die effizienteste Implementierung des erfindungsgemäßen Verfahrens ist eine Hardwareimplementierung, dargestellt in Figur 2. Hierbei wird von einer prozessorinternen Hardwareeinheit S die parallele Befehlsausführung an der gewünschten Stelle abzüglich Unschärfe angehalten, der Instruktionszählerstand IC ermittelt, und die Ausführungseinheit EU wird von der prozessorinternen Hardwareeinheit S mittels Single-Step bzw. Einzelschritt ES an die gewünschte Stelle im Code herangeführt. Der wesentliche Vorteil dieses Verfahrens ist der erheblich reduzierte negative Performance-Einfluß.

Figur 2 zeigt einen erfindungsgemäßen Prozessorbaustein CPU in einer schematischen Darstellung. Dabei sind nur die für diese Erfindung relevanten Bestandteile dargestellt. Die CPU umfaßt eine oder mehrere Ausführungseinheiten EU, mindestens einen Komparator K, mindestens einen Zähler IC zum Zählen der durch die Ausführungseinheit EU ausgeführten Instruktionen, eine Steuerung S und mindestens ein Registerelement MIR, dessen Inhalt durch Befehle vorgebbar oder fest vorgegeben sein kann. Ferner sind Verbindungen von/zu einem Interruptregister (Figur 3) schematisch dargestellt.

Die den Programmablauf beeinflussenden externen Ereignisse werden der CPU nicht direkt zugeführt, sondern von einer geeignet gestalteten Hardware zunächst gepuffert. Die Umsetzung des Verfahrens kann in der in Figur 2 dargestellten CPU erfolgen, indem das Register MIR mit der Differenz aus dem Wert MIC und dem Wert MD geladen wird. Der Komparator K vergleicht die Zahl der ausgeführten Operationen mit diesem Registerwert und signalisiert das Ergebnis dieses Vergleichs an die Steuerungseinheit S. Alternativ kann der Komparator auch nur ein Ereignis an die Steuerung übermitteln, das generiert wird, wenn der Wert des IC den Wert des MIR erreicht hat. Ist dieses Ereignis eingetreten oder wurde Gleichheit der beiden Register signalisiert, fragt die Steuerung S den Befehlszähler nochmals ab, um die Zahl der tatsächlich ausgeführten Instruktionen zu lesen. Da im MIR durch das Laden mit dem Wert MIC-MD die Unschärfe bereits berücksichtigt wurde, kann durch die Steuerung ein Einzelschrittmodus, signalisiert über die Leitung ES an die Ausführungseinheit, die Ausführung von Instruktionen einzeln veranlassen, bis der Wert des Befehlszählers den vorgegebenen Wert MIC erreicht. Die Steuerung S verfügt dazu über die Möglichkeit, den Befehlszähler IC zu inkrementieren, sofern der Befehlszähler die im Single-Step ausgeführten Instruktionen nicht automatisch zählt.

Die Steuerung S jeder redundanten CPU erzeugt ein Interruptfreigabesignal IF, das einem Interruptbaustein zugeführt wird. Daraufhin wird allen redundanten CPUs eine gegebenenfalls zwischengespeicherte Interruptanforderung über die Interruptleitung INT gemeldet.

Alternativ dazu erzeugt die Steuerung S einen Interrupt für die eigene CPU, woraufhin die Ausführungseinheiten einen Interrupt Acknowledge Zyklus zum Interruptbaustein senden, falls Interrupts zu diesem Zeitpunkt in der Befehlsabarbeitung erlaubt sind.

In einer weiteren Alternative wird durch die Steuerung S ein Interruptfreigabesignal IF erzeugt, welches dem Sinn nach mit dem Interruptsignal INT UND-verknüpft wird, d.h. die Schaltungslogik ist entsprechend zu wählen, falls invertierte Signale vorliegen oder falls das Interruptsignal auf mehreren Leitungen präsentiert wird. Das Interruptfreigabesignal kann ebenfalls nach außerhalb der CPU z.B. an das Interruptregister übermittelt werden. Eventuell an der Interruptleitung INT anliegende Interrupts werden somit freigegeben, und die gewöhnliche Interruptbehandlung kann erfolgen, z.B. Lesen des Interruptvektors, Ausführen der Interruptroutine usw.

Vor der Interruptbehandlung wird die Aufhebung des Einzelschrittmodus und des gesonderten Betriebsmodus und die Fortsetzung der Befehlsabarbeitung im Normalmodus an die Ausführungseinheit signalisiert, und der Befehlszähler wird über ein Signal CL zurückgesetzt. Die Steuerung kann direkt als Hardware oder in Form von Microcode realisiert sein.

In Figur 3 wird schließlich eine Zusammenschaltung zweier CPUs gemäß vorstehender Beschreibung im Zusammenhang mit Figur 2 gezeigt. Dabei sind der erste Prozessor CPU0 und der zweite Prozessor CPU1 ohne die Details aus Figur 2 dargestellt. Die Prozessoren tauschen jeweils Adressen und Daten über einen Bus A/D mit zugeordneten Interruptbausteinen, die u.a. Interruptregister IRO, IR1 umfassen, aus. Die Interruptbausteine empfangen Interrupts INT1..INTn beispielsweise von Eingabe/Ausgabebausteinen I/O, speichern entsprechende Kenndaten und leiten die Interrupts INT an die Prozessoren weiter.

Erfindungsgemäß werden die Interrupts durch die Prozessoren nur an bestimmten Stellen der Befehlsausführung akzeptiert. Dies ist ausführlich im Zusammenhang mit Figur 2 beschrieben.

Das in diesem Zusammenhang erläuterte Interruptfreigabesignal kann außerdem verwendet werden, um dem jedem Prozessor zugeordneten Interruptbaustein zu signalisieren, daß die Interruptbehandlung begonnen werden kann. Die Interruptbausteine, die über Verbindungen L0, L1 verbunden sind, können diese Informationen austauschen und die Interruptbehandlung ihrerseits erst dann z.B. durch Übermitteln des Interruptvektors an die Prozessoren freigeben, wenn alle Prozessoren ein Interruptfreigabesignal erzeugen.

In einer Alternative kann es sich als vorteilhaft erweisen, die CPUs nicht an einer vordefinierte Stelle MIC der Befehlsausführung anzuhalten, sondern an einer mit der Unschärfe der parallel abarbeitbaren Befehle behafteten Stelle, und dann die zurückliegenden Prozessoren per Single Step an die Stelle der Befehlsausführung heranzuführen, an der derjenige Prozessor angehalten hat, der in der Befehlsausführung am weitesten fortgeschritten ist. Hierzu ist eine Kommunikation zwischen den Prozessoren erforderlich. Diese kann beispielsweise so erfolgen, daß jeder Prozessor die Stelle, an der er selbst angehalten hat, in ein Hardware-Register schreibt und anschließend zurückliest. Das Register wartet bis alle Prozessoren ihren Wert geschrieben haben und liefert als Lesedatum den höchsten Wert zurück. Falls erforderlich, gleichen dann alle Prozessoren ihren Stand der Befehlsausführung per Single-Step an. Die Interruptanforderung wird den Prozessoren dann wie oben beschrieben präsentiert.

CPUs, die über SMT (Simultaneous Multi Threading) Fähigkeiten verfügen, müssen eine separate Steuerung für jede virtuelle CPU bzw. jeden Thread verfügen.

Ferner weist die CPU den Komparator oder Vergleicher K auf, der die Anzahl der ausgeführten Befehle, also den Zähler IC, mit dem Register MIR vergleicht und bei Gleichheit beispielsweise eine Interrupt-Anforderung generiert, der die Befehlsausführung nach der Zahl der durch das Register MIR vorgegeben Instruktionen unterbricht und die CPU in einen anderen Betriebsmodus schaltet. In diesem Betriebsmodus wird beispielsweise geeigneter Microcode ausgeführt oder in eine Interrupt Service Routine verzweigt oder per Hardware-Signalen das Erreichen dieses Synchronisationspunktes angezeigt. In diesem Betriebsmodus werden dann den redundanten CPUs die externen Ereignisse so präsentiert, daß nach dem Verlassen dieses Betriebsmodus alle CPUs diese Ereignisse gleich bewerten können und somit in der Folge die gleichen Befehle ausführen werden.

Beispielsweise verzweigt die CPU nach Erreichen der durch das Register MIR vorgegeben Anzahl von Maschineninstruktionen in eine Interrupt Service Routine, in welcher der Zustand von durch die beschriebene Hardware von der CPU ferngehaltenen Interrupt Signalen so abgefragt wird, daß eine redundante CPU, die ggf. diese Abfrage zu einem geringfügig späteren Zeitpunkt stellt, die identische Auskunft erhält.

Beim Verlassen des gesonderten Betriebsmodus wird der Zähler IC zurückgesetzt. Anschließend wird zu der Programmstelle zurückgesprungen, an der die Unterbrechung durch das Erreichen des durch das Register MIR vorgegeben Zählerwertes IC stattgefunden hat. Danach wird die CPU wieder die durch das Register MIR vorgegebene Anzahl von Maschineninstruktionen ausführen und bei Erreichen des Registerwertes MIR durch Zähler IC den Mode wechseln und dadurch die Annahme von externen Ereignissen ermöglichen.

Vorteilhaft sind die CPU-Register MIR so ausgebildet, daß sie durch Software oder Microcode beschreibbar sind, um zu gewährleisten, daß für verschiedene Einsatzgebiete eine Interruptbehandlung in adäquaten Intervallen stattfindet, indem entsprechend die Anzahl der auszuführenden Instruktionen zwischen den Zeitfenstern für die Interruptbehandlung festgelegt wird.

## Patentansprüche

1. Verfahren zur Synchronisation externer Ereignisse, die einem Baustein (CPU) zugeführt werden und diesen beeinflussen, wobei der Baustein (CPU) zur parallelen Abarbeitung von einer ersten Anzahl von Instruktionen vorgesehen ist,
- demgemäß die externen Ereignisse zwischengespeichert werden, wobei die gespeicherten externen Ereignisse in einem gesonderten Betriebsmodus des Bausteins zur Verarbeitung durch zumindest eine Ausführungseinheit (EU) des Bausteins abgerufen werden und
- wobei der Baustein in diesen Betriebsmodus nach Abarbeitung einer vorgebbaren zweiten Anzahl (MIC) von Instruktionen eintritt, indem
- ein Zähler (IC) die Anzahl der durch die Ausführungseinheit ausgeführten Instruktionen seit dem letzten Verlassen des gesonderten Betriebsmodus ermittelt,
- der Baustein in einen Einzelbefehlsausführungsmodus versetzt wird, falls der Zähler (IC) größer oder gleich der Differenz aus der zweiten Anzahl von Instruktionen und einer dritten Anzahl (MD) von Instruktionen, die aus der ersten Anzahl von Instruktionen ermittelt wird, ist,
- der Baustein im Einzelbefehlsausführungsmodus verbleibt, bis der Zähler (IC) die zweite Anzahl (MIC) von Instruktionen erreicht, woraufhin der Baustein in den gesonderten Betriebsmodus wechselt und bei Verlassen des gesonderten Betriebsmodus der Zähler (IC) neu initialisiert wird.

2. Verfahren nach Anspruch 1,
**dadurch gekennzeichnet,**
**daß** die dritte Anzahl von Instruktionen als gleich oder größer der ersten Anzahl maximal parallel ausgeführter Instruktionen gewählt wird.

3. Verfahren nach einem der Ansprüche 1 oder 2,
**dadurch gekennzeichnet,**
**daß** in redundanten Systemen, die zumindest zwei Bausteine (CPU) aufweisen, eine identische Folge von Instruktionen für die Bausteine (CPU) vorgesehen ist und durch die Bausteine im gesonderten Betriebsmodus identische externe Ereignisse abgerufen werden.

4. Verfahren nach Anspruch 3,
**dadurch gekennzeichnet,**
**daß** ein schnellerer Baustein (CPU) durch eine Steuerung im gesonderten Betriebsmodus belassen wird, bis ein langsamerer Baustein das Ende des gesonderten Betriebsmodus erreicht hat.

5. Verfahren nach einem der Ansprüche 1 bis 4,
**dadurch gekennzeichnet,**
**daß** bei einer Überwachung des Zählers (IC) durch ein Überwachungssoftwaremodul die Anzahl der durch das Überwachungssoftwaremodul verursachten ausgeführten Instruktionen gesondert erfaßt und vom Zähler (IC) subtrahiert wird.

6. Prozessorbaustein (CPU), der zumindest folgendes aufweist:
- mindestens eine Ausführungseinheit (EU),
- mindestens ein Zählerelement (IC) zum Zählen der durch die Ausführungseinheit ausgeführten Instruktionen seit dem letzten Wechsel in einen gesonderten Betriebsmodus,
- mindestens ein Registerelement (MIR), dessen Inhalt (MIC) durch Befehle vorgebbar oder fest vorgegeben ist,
- mindestens ein Komparatorelement (K) und mindestens ein Steuerelement (S) zum Umschalten der Ausführungseinheit (EU) in einen Einzelbefehlsausführungsmodus ansprechend auf das Erreichen eines vorgebbaren Wertes, der kleiner als der Wert des Registerelementes (MIR) ist, durch das Zählelement (IC), und zum Umschalten der Ausführungseinheit in den gesonderten Betriebsmodus ansprechend auf die Übereinstimmung des Zählelementes (IC) mit dem Registerelement (MIR), wobei in dem gesonderten Betriebsmodus zwischengespeicherte, dem Prozessorbaustein (CPU) zuzuführende externe Ereignisse, die den Prozessorbaustein (CPU) beeinflussen, durch den Prozessorbaustein (CPU) abgerufen werden.

7. System bestehend aus mindestens zwei Prozessorbausteinen (CPUO, CPU1), die jeweils zumindest folgendes aufweisen:
- mindestens eine Ausführungseinheit (EU),
- mindestens ein Zählerelement (IC) zum Zählen der durch die Ausführungseinheit ausgeführten Instruktionen seit dem letzten Wechsel in den gesonderten Betriebsmodus,
- mindestens ein Registerelement (MIR), dessen Inhalt durch Befehle vorgebbar oder fest vorgegeben ist,
- mindestens ein Komparatorelement (K) und mindestens ein Steuerelement (S) zum Umschalten der Ausführungseinheit (EU) in einen Einzelbefehlsausführungsmodus ansprechend auf das Erreichen eines vorgebbaren Wertes, der kleiner als der Wert des Registerelementes (MIR) ist, durch das Zählelement (IC), und zum Umschalten der Ausführungseinheit (EU) in einen gesonderten Betriebsmodus ansprechend auf die Übereinstimmung des Zählelementes (IC) mit dem Registerelement (MIR), wobei in dem gesonderten Betriebsmodus zwischengespeicherte, den Prozessorbausteinen zuzuführende externe Ereignisse, welche die Prozessorbausteine beeinflussen, durch die Prozessorbausteine abgerufen werden.

8. System nach Anspruch 7, das zusätzlich eine Verbindung (L0, L1) zwischen zumindest zwei der Prozessorbausteine (CPU), die eine identische Instruktionsfolge ausführen, aufweist, wobei die Verbindung zum Übertragen von Synchronisationsinformationen der gesonderten Betriebsmodi vorgesehen ist.
